# EUROPEAN PATENT SPECIFICATION

(11) **EP 1 605 769 B1**
(45) Date of publication and mention of the grant of the patent: **06.09.2006**
(21) Application number: 04719428.7
(22) Date of filing: 11.03.2004
(51) Int. Cl.: A23F 3/08, A23F 3/14

(54) **TEA MANUFACTURE**
TEE-HERSTELLUNG
PRODUCTION DE THE

(30) Priority: 21.03.2003 IN MU02932003; 08.05.2003 GB 0310563
(43) Date of publication of application: 21.12.2005
(73) Proprietor: UNILEVER PLC, London, Greater London EC4P 4BQ (GB); UNILEVER N.V., 3013 AL Rotterdam (NL)
(72) Inventor: GANESAN, Velu,Hindustan Lever Ltd, Gudalur Via,The Nilgiris District (IN); MOHAN, Ravi,Hindustan Lever Ltd, Valparai,Coimbatore District (IN); PADMANABHAN, Vijayan,Hindustan Lever Ltd, Whitefield P.O., Bangalore, 560 066 (IN); SAWANT, Madhuri, Harishchandra,Hindustan Lever Ltd, Andheri (East), Mumbai, 400 099 (IN); SHARMA, Navin, Kumar,Hindustan Lever Ltd, Whitefield P.O., Bangalore, 560 066 (IN); SINKAR, Vilas, Pandurang,Hindustan Lever Ltd, Whitefield P.O., Bangalore, 560 066 (IN)
(74) Representative: Hugot, Alain
(86) International application number: PCT/EP2004/002559
(87) International publication number: WO 2004/082390

(56) References cited:
- WO-A-01/70038
- WO-A-97/40699
- US-B1- 6 482 450
- DATABASE WPI Section Ch, Week 199009 Derwent Publications Ltd., London, GB; Class D13, AN 1990-062192 XP002281092 & JP 02 013348 A (SUNTORY LTD), 17 January 1990 (1990-01-17)

## Description

### Field of the invention

This invention relates to a process for obtaining cold water infusible or extractable tea and to the products obtained thereby that have improved red colour, infuse faster and have good flavour.

### Background to the invention

Leaf tea may be prepared as green leaf tea or black leaf tea. Generally, to prepare black leaf tea, fresh green leaves of the plant *Camellia sinensis* are withered (a process to allow the plucked tea leaves to lose moisture and bring about chemical /biochemical changes especially in aroma), macerated, fermented (in which process enzymes in the tea leaf use atmospheric oxygen to oxidise various substrates to produce coloured products) and then dried at higher temperatures (to stop the enzyme activities). Whereas, green tea is not exposed to the fermentation process and partial fermentation may be used to produce intermediate-type teas known as "oolong" tea.

Tea is consumed as a hot beverage or as a cold beverage (for example iced tea). The numerous compounds in the leaves that give the beverage its unique organoleptic properties are only sparingly soluble in cold water therefore tea is usually infused in water at temperatures close to 100 °C. When cold tea is desired, the tea leaf is infused in water at about 100 °C and if required chilled it is kept for example in a refrigerator until it is cold. Unfortunately this can take several hours, further the tea solids precipitate out on cooling giving rise to a beverage with a turbid appearance.

The cold water soluble teas can also be prepared by spray drying the liquor obtained by extraction of black tea or fibres generated during black tea manufacturing process. However, this process requires high temperatures or treatment with harsh chemicals like alkalis which adversely affect the tea attributes like taste, colour and flavour.

Enzymes have been added during the processing of tea to generate cold water infusing teas.

Thus, US 4,051,264 (Lipton/Sanderson) discloses a method for making a cold water infusing leaf tea extract. Tea leaves are pre-treated with an enzyme tannase under anaerobic conditions to generate a cold-water infusing tea with good colour, yield and flavour.

US 3,812,266 (Sanderson/Coggon) discloses a method that involves converting green tea to black using tannase and natural tea enzymes. The method also includes a tannase pre-treatment step, but in a slurry system, followed by oxidation by natural tea enzymes to convert green tea into black, and generate tea powders, which are both hot and cold water soluble.
However, tannase is an expensive enzyme and is also not legally cleared in several countries for usage in tea.

Apart from the advantages of obtaining cold water infusible tea, an important consideration for the consumer is tea colour, brightness and aroma. Tea colour refers to the colour of the infusion with or without milk. Black tea infusions can range from yellow to red-brown in colour. Teas with bright, red liquor and good aroma are particularly preferred in countries like India and are perceived to be 'strong' teas. It is thus desirable to produce tea with these characteristics.

Apart from red colour, faster infusion of the tea into the water is desirable as consumers perceive faster infusing teas to be strong teas. Thus teas that infuse fast and provide a good red colour are much preferred by consumers and are perceived to be teas with good strength.

There have been attempts to produce teas that have red colour by the addition of ingredients during tea processing.

Thus, US 5863581 (Lipton, Division of Conopco, Inc.) discloses a process for manufacturing a tea product where zeolites are used to generate red coloured teas.

Zeolites are a family of natural and synthetic aluminosilicate water insoluble materials having a negatively charged framework structure with cavities housing alkali metal or alkaline earth metal cations. The framework structure can house water and organic materials. However, the invention does not pertain to cold water infusible tea product.

Tadao Kurata et al in Agr. Biol. Chem, 37 (6), 1471-1477, 1973 discloses that a red pigment is produced at the initial stage of the browning reaction of dehydro-L-ascorbic acid (DHA) with alpha-amino acid. 5-phenyl-3,4-diketo-gamma-butyrolactone, which has the same type of lactone ring structure as dehydro-L-ascorbic acid, is said to give a similar red colour when reacted with alpha-amino acid. The pigment is said to have the same structure as the red pigment that is produced by the oxidation of L-scorbamic acid.

WO01/70038 concerns a process for manufacturing a cold water infusble black leaf tea comprising macerating freshly plucked tea leaves, allowing them to ferment, firing the leaves to arrest fermentation and then drying them to yield black leaf tea. The process is characterised in that the tea leaves are treated with a solubilising compound selected from the group consisting of ascorbic acid, dehydroascorbic acid, I-scorbamic acid or 5-phenyl-3,4-diketo-gamma-butyrolactone, preferably during the maceration step. The black leaf tea so produced is infusible in water at 5 to 100 °C. The teas have a good red colour. The addition of ascorbic acid results in a series of reactions giving a pigment that provides for good red colour.
Apart from ascorbic acid, citric acid is known to be added to soluble tea powders and infusions. Thus US3821440 (Brian Reeve) teaches the addition of citric acid to instant tea prepared by alkaline treatment of tea. Citric acid is used to adjust the pH. US3113028 (Rand Development Corporation) teaches the addition of citric acid or ascorbic acid to a tea concentrate as an acidifying agent. JP01005451 (General Foods Corp.) teaches the addition of citric acid to an aqueous, concentrated black tea solution to adjust the pH. However, the prior art as disclosed above does not teach the use of citric acid during processing of black tea.

SU 1517903 discloses a method to make black tea with improved sensory properties and quality wherein citric acid, ascorbic acid, sucrose, amino acids and caffeine are added together to form a syrup. The syrup is added in two stages - before and after the rolling. Rolling is a step used in making orthodox teas which do not make use of the cut-tear-curl (CTC) step in the processing. Moreover, this invention is not directed towards making teas with red colour and having a fast infusion rate in water and also infuses in cold water.

Thus there has been a need to provide for cold water infusible teas that have good red colour and more importantly fast infusion rate in water. The present inventors have now found that using the process of the present invention one can prepare a black leaf tea that provides a high quality tea beverage when infused in hot or cold water and that the infusions/extracts show improved red colour and have good flavour. The rate of infusion is also faster for teas prepared by the process of the invention.

"Tea" for the purposes of the present invention means leaf material from Camellia sinensis var. sinensis or Camellia sinensis var. assamica. It also includes rooibos tea obtained from Aspalathus linearis however that is a poor source of endogenous fermenting enzymes. "Tea" is also intended to include the product of blending two or more of any of these teas.

"Leaf tea" for the purposes of this invention means a tea product that contains one or more tea origins in an uninfused form.

"Cold water infusible" for the purposes of this invention means giving good colour, flavour and mouthfeel in a short infusion time i.e. less than 10 minutes, but preferably less than 5 minutes at a temperature at or above 5 °C.

"Mid-fermentation" means the point of time at which half of the fermentation time has elapsed.

For the avoidance of doubt the word "comprising" is intended to mean including but not necessarily "consisting of" or "composed of'. In other words the listed steps or options need not be exhaustive.

It is an object of the invention to provide for a cold or hot water infusible black tea

It is a further object of the invention to provide for a cold or hot water infusible black tea with improved red colour and good flavour.

A further object of the invention is to provide for a cold or hot water infusible tea that infuses quickly into the water.

### Summary of the Invention

According to the first aspect of the invention, there is provided a process for manufacturing a black leaf tea comprising the steps of optionally withering freshly plucked tea leaf, macerating, allowing the leaves to ferment, firing the leaves to arrest fermentation and then drying them to yield black leaf tea, the process being characterised in that the tea leaves are treated before fermentation or before mid-fermentation with a pH lowering agent, preferably citric or malic acid or its salts or mixtures thereof, followed by treatment during fermentation by adding ascorbic acid or its salts or mixtures thereof at mid-fermentation or later in an amount that is sufficient for the black leaf tea to be infusible in water at 5 to 100 °C.

The invention also pertains to the tea obtained by this process. The tea so obtained is cold water and hot water infusible/extractable and the infusion/extract shows improved red colour. The tea also infuses quickly into the water.

### Detailed Description of the Invention:

Tea manufacture, especially black tea manufacture, traditionally comprises: withering, macerating, fermenting and firing. Black tea for the purpose of the invention is obtained by the following process.

Withering is a process whereby the plucked tea leaves are stored for periods of time (perhaps up to 24 hours), during which they undergo various biochemical and physical changes which often includes a loss of moisture. It is optional but preferred.

Maceration follows the withering step, and traditionally the withered leaves are optionally rolled to bruise and crush the leaves i.e. break down the plant tissue structure. This will have the effect of liberating fermentable substrates and fermenting enzymes from within the plant cells and tissue. Modern tea manufacture usually includes this step however the plant cells and tissue is broken down by passing tea, which has usually been withered, through a cutting machine. Thus for the purpose of the invention the green tea leaves may be macerated using a CTC, ball mill or a grinder or a hammer mill or a LAWRI^{™} tea processor or a LEGG^{™} cutting machine or rolled using tea rollers as in orthodox tea processing.

The next step is commonly called fermentation but that is a misnomer. "Fermentation" is commonly used in the context of brewing alcohol to describe the action of exogenous enzymes. However in the tea world it is used to refer to the oxidative and hydrolytic process that tea undergoes when certain endogenous enzymes and substrates are brought together by mechanical disruption of the cells by macerating of the leaves. During this process colourless catechins in the leaves are converted to a complex mixture of yellow and orange to dark-brown substances and producing a large number of aromatic volatile compounds.

The fermented product is fired and dried to give a black leaf tea. The firing involves heating and drying the tea to destroy the fermenting enzymes and thereby arrest fermentation. It results in a reduction of moisture content to below 5%, and also leads to further chemical oxidation and changes in tea aroma. This generally involves exposing the tea to a blast of hot, dry air in a dryer.

The present invention concerns a modification to traditional black tea manufacture. The modification involves treating the tea leaves before fermentation or before mid-fermentation with a pH lowering agent, preferably citric or malic acid or its salts or their mixtures thereof, followed by treatment by adding ascorbic acid or its salts or their mixtures thereof at mid-fermentation or later in order to enhance the infusibility of the black tea in cold water.

The tea leaves are treated with the pH lowering agent, for example citric acid, post plucking but before mid-fermentation, preferably during maceration or at the beginning of fermentation. If the pH lowering agent is citric acid, it is preferably added in an amount of from 0.05 to 5%, more preferably 0.1 to 4%, most preferably 0.1 to 3% by weight of the tea. The citric acid is preferably added in the form of a solution, preferably an aqueous solution, in single or split doses. The treatment is preferably given in the form of a spray or dip.

The tea leaves are treated with ascorbic acid after treatment with the pH lowering agent. It is essential that the ascorbic acid is applied after the addition of the pH lowering agent. Preferably the ascorbic acid is added after mid-fermentation or in the end- fermentation stage. Ascorbic acid is preferably added in an amount of from 0.1 to 10%, more preferably from 0.1 to 8% and most preferably from 0.1 to 5% by weight of the tea. The ascorbic acid is preferably added in the form of a solution, preferably an aqueous solution, in single or split doses. The treatment is preferably given in the form of a spray or dip.

The tea is preferably fermented from 10 minutes to 3 hours at 10 to 60 °C.

The tea can be dried using any art-known means, preferably giving leaf tea with a moisture content of less than 5%.

The products obtained by the above process can be used to produce instant tea or for infusing black tea in water at temperatures in the range of 5 to 100 °C. The instant tea can be produced by extracting the tea leaves produced by the above process with boiling water, clarifying the extract, and drying it. The instant tea produced by this method will give higher yields of cold water soluble tea solids having superior red colour and flavour than the instant tea produced by the conventional methods. Water infusions of the tea produced by the process described above in water at temperatures in the range of 5 to 100 °C will give tea with superior colour and flavour.

The black leaf tea prepared by the process of the invention also infuses faster and gives superior red colour in a shorter time than control teas as well as cold water infusible teas prepared by processes outside the invention.

The red colour can be further enhanced by heating the tea leaves with microwaves prior to infusion of the leaf tea to make a tea infusion.

A first preferred embodiment of the process of the invention comprise the steps of:
(a) macerating green tea leaves after optionally withering the tea leaves
(b) processing the macerated tea in a conventional manner to obtain black tea, wherein the green tea post plucking is treated first with 0.9 to 5% by weight of the tea of a pH-lowering agent, preferably citric acid or its salts or mixtures thereof in single or split doses at any step up to and including the beginning of fermentation, followed by treatment by adding 0.1 to 10% by weight of the tea of ascorbic acid or its salts or mixtures thereof in single or split doses at mid-fermentation or later
(c) further processing the tea in a conventional manner to obtain black tea.

The process of the invention shall now be described with reference to the following examples:

### EXAMPLES

### Comparative Example A

800 grams of withered tea leaf was macerated using four cuts on a CTC. The untreated macerated mass was processed further by fermenting on a continuous fermenting unit for 80 minutes at 25°C, followed by drying on a fluid bed drier at 140 - 150 °C to bring down the moisture to less than 5% on black tea basis.

### Comparative Example B

800 grams of withered tea leaf was macerated using two cuts on a CTC followed by 40 minutes fermentation on a continuous fermenting unit and fermenting at 25°C. 7.2 g ascorbic acid was then added as a 3% solution. Two more cuts were given, after which the treated dhool was fermented for 40 minutes on a continuous fermenting unit followed by drying in a fluidised bed drier at 140 - 150 °C for 20 minutes to bring down the moisture to less than 5% on black tea basis.

### Comparative Example C:

800 grams of withered tea leaf was macerated using two cuts on a CTC. 1.2 g Citric acid was then added as a 0.5% aqueous solution. Two more cuts were given, after which the treated dhool was fermented for 80 minutes on a continuous fermenting unit at 25°C followed by drying in a fluidised bed drier at 140 - 150 °C for 20 minutes to bring down the moisture to less than 5% on black tea basis.

### Comparative Examples D

800 grams of withered tea leaf was macerated using one cut on a CTC. 7.2 g ascorbic acid was added as a 3% solution. Another cut was given, after which the treated dhool was fermented for 40 minutes on a continuous fermenting unit. 1.2 g citric acid was then added as a 0.5% solution and the mass was fermented at 25°C. Two more cuts were then given. The mass was further fermented for 40 minutes on a continuous fermenting unit followed by drying in a fluidised bed drier at 140 - 150 °C for 20 minutes to bring down the moisture to less than 5% on black tea basis.

### Comparative Example E

800 grams of withered tea leaf was macerated using two cuts on a CTC. A mixture of 0.5% citric acid and 3% ascorbic acid was then added to the mass. Two more cuts were given, after which the treated dhool was fermented for 80 minutes on a continuous fermenting unit and fermented at 25°C followed by drying in a fluidised bed drier at 140 - 150 °C for 20 minutes to bring down the moisture to less than 5% on black tea basis.

### Comparative Example F

800 grams of withered tea leaf was macerated using two cuts on a CTC followed by 40 minutes fermentation on a continuous fermenting unit and fermenting at 25°C. A mixture of 0.5% citric acid and 3% ascorbic acid was then added. Then two more cuts were given, after which the treated dhool was fermented for 40 minutes on a continuous fermenting unit followed by drying in a fluidised bed drier at 140 - 150°C for 20 minutes to bring down the moisture to less than 5% on black tea basis.

### Example 1

800 grams of withered tea leaf was macerated using one cut. 1.2 g citric acid was then added as a 0.5% solution. Another cut was given, after which the treated dhool was fermented for 40 minutes on a continuous fermenting unit. 7.2 g ascorbic acid was then added as a 3% solution and fermented at 25°C. Then two more cuts were given. The mass was further fermented for 40 minutes on a continuous fermenting unit followed by drying in a fluidised bed drier at 140 - 150 °C for 20 minutes to bring down the moisture to less than 5% on black tea basis.

### Example 2 - preparation of cold water infusions

2 g of black tea samples were infused-in 100 ml of water at 25°C for 5 minutes. The solution was filtered to give cold tea infusions and the colour of infusions obtained from Comparative Examples A-F and Example 1 was measured using a Hunter Lab Ultrascan XE^{™} colorimeter in the transmittance mode. The data is presented in Table 1.

### Colour measurements

L*a*b* measurements for colour were carried out on Hunterlab UltraScan XE^{™} colorimeter under the following conditions:
Cuvette 2cms (Quartz), Mode Transmittance, Illuminant D65, Observer 10, Scale CIELAB. The reflectance at 520 nm was also determined. 50 ml of the brew was taken in a 2 cm quartz cuvette, transmittance/reflectance was measured under the conditions mentioned above.

The a* values are reported as these denote redness of the tea. The higher the value, the redder the tea. 520 nm is the wavelength at which the red colour absorbs. The higher the absorbance value the greater the red colour.

**Table 1:**

| **Example** | **a*** | **Absorbance 520 nm** |
|---|---|---|
| A | 27.7 | 0.8 |
| B | 61.5 | 2.8 |
| C | 37.1 | 1.0 |
| D | 59.8 | 2.2 |
| E | 62.4 | 3.0 |
| F | 62.9 | 3.0 |
| 1 | 64.1 | 3.8 |

### Example 3 - preparation of hot water infusions

136 ml of water was boiled in a saucepan. To the boiling water, 5 g of tea was added and the boiling continued for one minute. 114 ml of boiled milk and 10 g of sugar were added and stirred to mix. The mixture was boiled to one rise and then strained to remove spent tea. The colour of the liquor was measured in reflectance mode at 40 °C in a Hunter Lab Ultrascan XE^{™} colorimeter. The data is presented in Table 2.

**Table 2:**

| **Example** | **a*** |
|---|---|
| A | 11.7 |
| B | 17.2 |
| C | 13.0 |
| D | 17.0 |
| E | 17.4 |
| F | 17.8 |
| 1 | 18.9 |

The data in Table 1 and 2 shows that in Example 1, the a* as well as the 520 nm (in Table 1) values have been significantly increased indicating that the infusions have a deeper red colour as compared to Comparative Example A which had not been treated with acid and which has a very pale yellow colour. Addition of only ascorbic acid (Comparative example B) and citric acid (Comparative Example C) does not give teas with as good red colour as the tea of Example 1.

Further, the data clearly shows that the sequence of addition of citric acid and ascorbic acid according to the invention is important. Thus Example 1 is a tea of superior red colour as compared to the teas of Comparative Example D to F.

Difference of greater than one unit in a* value can be easily perceived by human eye and sensory panels.

### Rate of Infusion

The rate at which the tea infuses into cold water was also studied. The effect was studied for Comparative Examples A and B and Example 1. The colour of the infusion after 30 seconds, 1, 2, 3, 4 and 5 minutes was determined. The data is presented in Table 3.

**Table 3:**

| **Example** | **Time (minutes)** | **a*** | **Absorbance 520nm** |
|---|---|---|---|
| A | 0.5 | 5.4 | 0.30 |
| | 1 | 8.7 | 0.37 |
| | 2 | 14.0 | 0.46 |
| | 3 | 19.0 | 0.56 |
| | 4 | 21.2 | 0.60 |
| | 5 | 23.6 | 0.67 |
| B | 0.5 | 49.3 | 1.30 |
| | 1 | 54.9 | 1.60 |
| | 2 | 57.6 | 1.90 |
| | 3 | 60.5 | 2.40 |
| | 4 | 61.1 | 2.50 |
| | 5 | 61.9 | 2.80 |
| 1 | 0.5 | 57.5 | 1.80 |
| | 1 | 60.1 | 2.10 |
| | 2 | 63.3 | 2.90 |
| | 3 | 63.6 | 3.10 |
| | 4 | 63.8 | 3.20 |
| | 5 | 63.7 | 3.30 |

The data presented in table 3 shows that the teas prepared by the process of the invention infuse faster and give better red colour within a short period as compared to control teas or teas treated with ascorbic acid.

### Example 4 - Heat treatment of tea by microwaving and tea infusions prepared from the teas

2 g of the black tea of Comparative Examples A and B and Example 1 were microwaved in a glass petri dish for a period of 2 minutes in a conventional microwave. The teas were then used to prepare cold water infusions. The process was as given above. A control black tea that had not been microwaved was used for comparison. The data on the infusions is presented in Table 4.

**Table 4:**

| **Example** | **Time (minutes)** | **a*** | **Absorbance 520nm** |
|---|---|---|---|
| A | 0 | 13.9 | 0.45 |
| | 2 | 22.0 | 0.60 |
| B | 0 | 61.2 | 2.50 |
| | 2 | 64.0 | 3.20 |
| 1 | 0 | 63.8 | 3.10 |
| | 2 | 64.6 | 3.55 |

The data presented in Table 4 shows that the red colour can be further enhanced by microwaving the tea prior to preparing the infusions. The process also reduces the microbial load on the black tea.

It is thus possible by way of the present invention to produce a black leaf tea that infuses quickly in hot or cold water and provides for a good red colour.

## Claims

1. A process for manufacturing a cold water soluble black leaf tea comprising the steps of
(a) optionally withering freshly plucked tea leaf,
(b) macerating the leaves,
(c) allowing the leaves to ferment,
(d) firing the leaves to arrest fermentation and
(e) then drying them to yield black leaf tea,
the process being **characterised in that** the tea leaves are treated before fermentation or before mid-fermentation with a pH lowering agent, followed by treatment during fermentation by adding ascorbic acid, salts of ascorbic acid or mixtures thereof at mid-fermentation or later in an amount that is sufficient for the black leaf tea to be infusible in water at 5 to 100 °C.

2. A process as claimed in claim 1 wherein the pH lowering agent is citric acid, salts of citric acid, malic acid, salts of malic acid or mixtures thereof.

3. A process as claimed in claim 1 or claim 2 wherein the tea leaves are treated with the pH lowering agent during maceration or at the beginning of fermentation

4. A process as claimed in any preceding claim wherein the pH lowering agent is citric acid added in an amount of 0.05 to 5% by weight of the tea.

5. A process as claimed in any one of claim 1 to 3 wherein the pH lowering agent is citric acid added in an amount 0.1 to 4% by weight of the tea.

6. A process as claimed in any one of claims 1 to 3 wherein the pH lowering agent is citric acid added in an amount of 0.1 to 3% by weight of the tea.

7. A process as claimed in any preceding claim wherein the pH lowering agent is added in the form of a solution in a single or split doses.

8. A process as claimed in claim 7 wherein the solution is an aqueous solution.

9. A process as claimed in any preceding claim wherein the ascorbic acid is added in an amount of 0.1 to 10% by weight of the tea.

10. A process as claimed in any one of claims 1 to 8 wherein the ascorbic acid is added in an amount 0.1 to 8% by weight of the tea.

11. A process as claimed in any one of claims 1 to 8 wherein the ascorbic acid is added in an amount of 0.1 to 5% by weight of the tea.

12. A process as claimed in any preceding claim wherein the ascorbic is added in the form of a solution in a single or split doses.

13. A process as claimed in claim 12 wherein the solution is an aqueous solution.

14. A process as claimed in any preceding claim wherein the fermentation lasts for 10 minutes to 3 hours at a temperature in the range 10 to 60°C.

15. A process as claimed in claim 1 comprising the steps of
a) macerating green tea leaves after optionally withering the tea leaves
b) processing the macerated tea leaves in a conventional manner to obtain black tea, wherein the green tea is treated first with 0.1 to 5% by weight of the tea of the pH-lowering agent in single or split doses at any time up to and including the beginning of fermentation, followed by treatment with 0.1 to 10% by weight of the tea of ascorbic acid, salts of ascorbic acid or mixtures thereof in single or split doses from mid-fermentation or later
c) further processing the tea in a conventional manner to obtain black tea.

16. A process as claimed in claim 15 wherein the pH lowering agent is citric acid, salts of citric acid or mixtures thereof.

17. A process as claimed in any preceding claim wherein the resulting black tea leaf is heated with microwaves prior to infusion.

## Patentansprüche

1. Verfahren zur Herstellung eines kaltwasserlöslichen schwarzen Blatt-Tees, umfassend die Schritte:
(a) gegebenenfalls Welkenlassen frisch gepflückter Teeblätter,
(b) Mazerieren der Blätter,
(c) Fermentierenlassen der Blätter,
(d) Erhitzen der Blätter zum Stoppen der Fermentation, und
(e) nachfolgendes Trocknen derselben zum Erhalt von schwarzem Blatt-Tee,
welches Verfahren **dadurch gekennzeichnet ist, dass** die Teeblätter vor der Fermentation oder vor der Mitte der Fermentation mit einem den pH-Wert senkenden Mittel behandelt werden, gefolgt von einer Behandlung während der Fermentation durch Zugeben von Ascorbinsäure, Salzen der Ascorbinsäure oder Mischungen davon in der Mitte der Fermentation oder später in einer Menge, die ausreicht, damit der schwarze Blatt-Tee in Wasser bei 5 bis 100°C aufgießbar ist.

2. Verfahren nach Anspruch 1, wobei das den pH-Wert senkende Mittel Zitronensäure, Salze der Zitronensäure, Apfelsäure, Salze der Apfelsäure oder Mischungen davon sind.

3. Verfahren nach Anspruch 1 oder Anspruch 2, wobei die Teeblätter mit dem den pH-Wert senkenden Mittel während der Mazerierung oder zu Beginn der Fermentation behandelt werden.

4. Verfahren nach einem vorhergehenden Anspruch, wobei das den pH-Wert senkende Mittel Zitronensäure ist, die in einer Menge von 0,05 bis 5 Gew.-% des Tees zugegeben wird.

5. Verfahren nach einem der Ansprüche 1 bis 3, wobei das den pH-Wert senkende Mittel Zitronensäure ist, die in einer Menge von 0,1 bis 4 Gew.-% des Tees zugegeben wird.

6. Verfahren nach einem der Ansprüche 1 bis 3, wobei das den pH-Wert senkende Mittel Zitronensäure ist, die in einer Menge von 0,1 bis 3 Gew.-% des Tees zugegeben wird.

7. Verfahren nach einem vorhergehenden Anspruch, wobei das den pH-Wert senkende Mittel in Form einer Lösung in einer einzigen Dosis oder in geteilten Dosen zugegeben wird.

8. Verfahren nach Anspruch 7, wobei die Lösung eine wässerige Lösung ist.

9. Verfahren nach einem vorhergehenden Anspruch, wobei die Ascorbinsäure in einer Menge von 0,1 bis 10 Gew.-% des Tees zugegeben wird.

10. Verfahren nach einem der Ansprüche 1 bis 8, wobei die Ascorbinsäure in einer Menge von 0,1 bis 8 Gew.-% des Tees zugegeben wird.

11. Verfahren nach einem der Ansprüche 1 bis 8, wobei die Ascorbinsäure in einer Menge von 0,1 bis 5 Gew.-% des Tees zugegeben wird.

12. Verfahren nach einem vorhergehenden Anspruch, wobei die Ascorbinsäure in Form einer Lösung in einer einzigen oder in geteilten Dosen zugegeben wird.

13. Verfahren nach Anspruch 12, wobei die Lösung eine wässerige Lösung ist.

14. Verfahren nach einem vorhergehenden Anspruch, wobei die Fermentation 10 Minuten bis 3 Stunden dauert, bei einer Temperatur im Bereich von 10 bis 60°C.

15. Verfahren nach Anspruch 1, umfassend die Schritte:
(a) Mazerieren grüner Teeblätter, nach fakultativem Welkenlassen der Teeblätter,
(b) Verarbeiten der mazerierten Teeblätter auf herkömmliche Weise zum Erhalt von Schwarztee, wobei der grüne Tee zuerst mit 0,1 bis 5 Gew.-%, auf den Tee bezogen, des pH-Wert senkenden Mittels in einer einzigen oder in geteilten Dosen während einer Zeit bis zum und einschließlich des Beginns der Fermentation, gefolgt von einer Behandlung mit 0,1 bis 10 Gew.-%, auf den Tee bezogen, Ascorbinsäure, Salzen der Ascorbinsäure oder Mischungen davon in einer einzigen oder in geteilten Dosen ab der Mitte der Fermentation oder später,
c) weiteres Verarbeiten des Tees auf herkömmliche Weise zum Erhalt von Schwarztee.

16. Verfahren nach Anspruch 15, wobei das den pH-Wert senkende Mittel Zitronensäure, Salze der Zitronensäure oder Mischungen davon sind.

17. Verfahren nach einem vorhergehenden Anspruch, wobei der resultierende schwarze Blatt-Tee vor dem Aufgießen mit Mikrowellen erhitzt wird.

## Revendications

1. Procédé de fabrication de thé noir en feuilles soluble dans l'eau froide, comprenant les étapes consistant à
(a) flétrir éventuellement des feuilles de thé fraîchement récoltées,
(b) faire macérer les feuilles,
(c) permettre une fermentation des feuilles,
(d) dessécher les feuilles pour stopper la fermentation et
(e) les faire ensuite sécher pour donner du thé noir en feuilles,
le procédé étant **caractérisé en ce que** les feuilles de thé sont traitées avant la fermentation ou bien avant la moitié de la fermentation avec un agent abaissant le pH, puis traitées au cours de la fermentation par addition d'acide ascorbique, de sels d'acide ascorbique ou de mélanges de ceux-ci à la moitié de la fermentation ou plus tard, en une quantité suffisante pour que le thé noir en feuilles puisse infuser dans de l'eau à 5 à 100°C.

2. Procédé selon la revendication 1, dans lequel l'agent abaissant le pH est l'acide citrique, des sels d'acide citrique, l'acide malique, des sels d'acide malique ou des mélanges de ceux-ci.

3. Procédé selon la revendication 1 ou la revendication 2, dans lequel les feuilles de thé sont traitées avec l'agent abaissant le pH lors de la macération ou au début de la fermentation.

4. Procédé selon l'une quelconque des revendications précédentes, dans lequel l'agent abaissant le pH est l'acide citrique ajouté en une quantité de 0,05 à 5 % en poids du thé.

5. Procédé selon l'une quelconque des revendications 1 à 3, dans lequel l'agent abaissant le pH est l'acide citrique ajouté en une quantité de 0,1 à 4 % en poids du thé.

6. Procédé selon l'une quelconque des revendications 1 à 3, dans lequel l'agent abaissant le pH est l'acide citrique ajouté en une quantité de 0,1 à 3 % en poids du thé.

7. Procédé selon l'une quelconque des revendications précédentes, dans lequel l'agent abaissant le pH est ajouté sous la forme d'une solution en une seule dose ou en doses fractionnées.

8. Procédé selon la revendication 7, dans lequel la solution est une solution aqueuse.

9. Procédé selon l'une quelconque des revendications précédentes, dans lequel l'acide ascorbique est ajouté en une quantité de 0,1 à 10 % en poids du thé.

10. Procédé selon l'une quelconque des revendications 1 à 8, dans lequel l'acide ascorbique est ajouté en une quantité de 0,1 à 8 % en poids du thé.

11. Procédé selon l'une quelconque des revendications 1 à 8, dans lequel l'acide ascorbique est ajouté en une quantité de 0,1 à 5 % en poids du thé.

12. Procédé selon l'une quelconque des revendications précédentes, dans lequel l'acide ascorbique est ajouté sous la forme d'une solution en une seule dose ou en doses fractionnées.

13. Procédé selon la revendication 12, dans lequel la solution est une solution aqueuse.

14. Procédé selon l'une quelconque des revendications précédentes, dans lequel la fermentation dure de 10 minutes à 3 heures à une température comprise dans la plage de 10 à 60°C.

15. Procédé selon la revendication 1, comprenant les étapes consistant à
a) faire macérer des feuilles de thé vert éventuellement après flétrissage des feuilles de thé,
b) traiter les feuilles de thé macérées d'une manière classique afin d'obtenir du thé noir, le thé vert étant d'abord traité avec de 0,1 à 5 % en poids du thé de l'agent abaissant le pH en une seule dose ou en doses fractionnées à un moment quelconque jusqu'au début de la fermentation, y compris le début de la fermentation, puis traité avec de 0,1 à 10 % en poids du thé d'acide ascorbique, de sels d'acide ascorbique ou de mélanges de ceux-ci, en une seule dose ou en doses fractionnées à partir de la moitié de la fermentation ou plus tard,
c) traiter en outre le thé d'une manière classique afin d'obtenir du thé noir.

16. Procédé selon la revendication 15, dans lequel l'agent abaissant le pH est l'acide citrique, des sels d'acide citrique ou des mélanges de ceux-ci.

17. Procédé selon l'une quelconque des revendications précédentes, dans lequel les feuilles de thé noir résultantes sont chauffées par micro-ondes avant l'infusion.
